# EUROPÄISCHE PATENTSCHRIFT

(11) **EP 3 717 196 B1**
(45) Veröffentlichungstag und Bekanntmachung des Hinweises auf die Patenterteilung: **07.06.2023**
(21) Anmeldenummer: 18815585.7
(22) Anmeldetag: 30.11.2018
(51) Int. Cl.: B29C 44/58, B29C 44/60, B29C 44/12, B29C 33/12

(54) **FORMWERKZEUG ZUM UMSCHÄUMEN EINER SCHEIBE UND WENIGSTENS EINES BLECHEINLEGETEILS**
MOULDING TOOL FOR FOAM OVERMOULDING A GLASS PANE AND AT LEAST ONE INSERT PART
OUTIL DE MOULAGE SERVANT À ENROBER DE MOUSSE UN DISQUE ET AU MOINS UNE PIÈCE D'INSERTION DE TÔLE

(30) Priorität: 01.12.2017 DE 102017128614
(43) Veröffentlichungstag der Anmeldung: 07.10.2020
(73) Patentinhaber: BBG GmbH & Co. KG, 87719 Mindelheim Bayern (DE)
(72) Erfinder: BRANDNER, Hans, 87719 Mindelheim (DE); ORTLOFF, Richard, 87719 Mindelheim (DE)
(74) Vertreter: Keller Schneider Patentanwaltsgesellschaft mbH
(86) Internationale Anmeldenummer: PCT/EP2018/083176
(87) Internationale Veröffentlichungsnummer: WO 2019/106160

(56) Entgegenhaltungen:
- EP-A1- 2 586 587
- DE-A1-102015 000 618
- DE-U1- 29 704 030
- DE-U1-202008 014 027
- US-A1- 2009 066 120
- US-A1- 2013 056 893

## Beschreibung

Die Erfindung betrifft ein Formwerkzeug zum Umschäumen einer Scheibe und wenigstens eines Blecheinlegeteils gemäß dem Oberbegriff des Patentanspruchs 1.

Ein Formwerkzeug mit einem Werkzeugunterteil und einem diesem gegenüber schwenkbar gelagerten Werkzeuoberteil ist aus der DE 203 11 439 U1 oder DE 297 04 030 U1 bekannt.

Mit diesem Formwerkzeug können Scheiben mit Blecheinlegeteilen durch eine Umschäumung mit Kunststoff, insbesondere mit Polyurethan (PU) verbunden werden. Wird beim Vorbereiten der Umschäumung ein Blecheinlegeteil vergessen oder falsch positioniert, so ist dies nach dem Umschäumen nicht mehr korrigierbar und die gesamte umschäumte Scheibe muss als Ausschuss entsorgt werden.

Aufgabe der Erfindung ist es, ein Werkzeug zu schaffen, das eine erhöhte Prozess-Sicherheit beim Verbinden von Blecheinlegeteilen mit Scheiben durch eine Umschäumung bewirkt.

Diese Aufgabe wird durch ein Formwerkzeug mit den Merkmalen des Anspruchs 1 gelöst. Vorteilhafte Ausgestaltungen der Erfindung sind in den darauf bezogenen Unteransprüchen angegeben.

Mit der vorliegenden Erfindung ist eine fehlerfreie Serienproduktion gewährleistet. Durch die Vermeidung von Ausschuss entsteht ein erheblicher wirtschaftlicher Nutzen, verbunden mit der umweltfreundlichen Schonung von Ressourcen.

Ein bevorzugtes Einsatzgebiet der Erfindung können beispielsweise Formwerkzeuge für das Umschäumen von flächigen Bauteilen - wie beispielsweise Glasdeckeln oder Kunststoffscheiben für Fahrzeugdächer - mit Polyurethan (PU) sein.

Durch den wenigstens einen Sensor, der besondere als induktiver Sensor ausgebildet ist, ist es möglich, das Vorhandensein und die richtige Position jedes Blecheinlegeteils durch die Scheibe hindurch zu detektieren. Der Sensor kommt dadurch nicht unmittelbar mit dem Bereich des Formwerkzeugs in Berührung, in dem die Umschäumung erzeugt wird. Der Sensor wird dadurch zum einen vor Verschmutzung geschützt und zum anderen hält die in einem geringeren Abstand vom Sensor positioniert Scheibe auch eine zu große, vom flüssigen Kunststoff ausgehende Hitze vom Sensor fern. Auf bislang überwiegend beim Stand der Technik verwendete mechanische Positionsprüfmittel, wie beispielsweise in Positionierbohrungen am Blecheinlegeteil eingreifende, am betreffenden Werkzeugunterteil oder Werkzeugoberteil vorgesehene Stifte, kann durch die Erfindung verzichtet werden.

Bevorzugt ist bei mehreren Blecheinlegeteilen jedem Blecheinlegeteil wenigstens ein Sensor zugeordnet. Über eine Auswertungselektronik wird der Schäumvorgang am Werkzeug erst dann freigegeben, wenn jeder der Sensoren die korrekte Position des zugeordneten Blecheinlegeteil signalisiert.

In einer vorteilhaften Ausführung ist der wenigstens eine Sensor zur Einstellung des Abstandes A zur Scheibe bewegbar am Werkzeugoberteil oder am Werkzeugunterteil gelagert. In dieser Anmeldung werden Werkzeugoberteil und Werkzeugunterteil immer beide erwähnt, weil eine Anordnung der Scheibe im Formwerkzeug wahlweise so erfolgen kann, dass die Scheibe entweder mit ihrer Außenseite nach unten in das Werkzeugunterteil eingelegt wird und die Zufuhr der Blecheinlegeteile und die Herstellung der Umschäumung von der Seite des Werkzeugoberteils her erfolgen oder die Scheibe mit ihrer Außenseite nach oben am Werkzeugoberteil gehalten wird und die Blecheinlegeteile und die Kavität für die Herstellung der Umschäumung auf der Seite des Werkzeugunterteils positioniert sind. Die Kavität für die Herstellung der Umschäumung kann optional auch am Werkzeugoberteil und am Werkzeugunterteil gleichzeitig jeweils teilweise ausgebildet sein.

Gemäß einer vorteilhaften Ausführung ist vorgesehen, dass der Sensor an einem Aufnahmeadapter angeordnet ist, der mittels eines Gewindes gegenüber dem ihn aufnehmenden Werkzeugoberteil oder Werkzeugunterteil in seiner Position verstellbar ist. Durch die feine Verstellbarkeit mittels des Gewindes ist eine Feinjustierung des Abstandes A zwischen dem Sensor und der diesem zugewandten Oberfläche der Scheibe bzw. auch eine Feinjustierung eines Abstandes B zwischen dem Sensor und dem auf der anderen Seite der Scheibe positionierten Blecheinlegeteil in einfacher Weise möglich. Der Aufnahmeadapter schützt den Sensor zum einen weitestgehend vor Beschädigung und ist zum anderen für einen einfachen Austausch eines eventuell beschädigten Sensors auch einfach aus dem jeweiligen Werkzeugteil (Werkzeugoberteil oder Werkzeugunterteil) entnehmbar.

In einer weiteren vorteilhaften Ausgestaltung ist der Sensor mittels eines Gewindes mit dem Aufnahmeadapter verbunden, wodurch die leichtere Austauschbarkeit eines Sensors unterstützt wird.

In einer besonders vorteilhaften Ausführungsform ist vorgesehen, dass der Aufnahmeadapter mittels eines Distanzrings und/oder eines Einstellrings verstellbar am Werkzeugoberteil oder am Werkzeugunterteil gelagert ist. Nachdem der Abstand zwischen Sensor und Scheibe bzw. Sensor und Blecheinlegeteil für eine optimale Detektierung richtig eingestellt ist, ist diese Position des Einstellrings, in der der Sensor seinen optimal zuverlässigen Arbeitsbereich hat, vorzugsweise mittels einer Kontermutter fixierbar.

Eine sehr vorteilhafte Weiterbildung der Erfindung sieht vor, dass eine der Scheibe zugewandte Seite des Sensors in einen Hohlraum ausmündet, in dem ein Unterdruck erzeugbar ist. Durch das Teilvakuum wird zum einen thermische Isolation des Sensors gegenüber der Scheibe verbessert und zum anderen durch das häufige Absaugen von Luft aus dem Hohlraum der Sensor wirksam vor Verschmutzung geschützt.

In einer vorteilhaften Ausgestaltung ist der Hohlraum durch wenigstens eine Dichtung gegenüber der Scheibe abgedichtet. Die Dichtung ist bevorzugt unmittelbar in einer Nut am jeweiligen Werkzeugteil (am Werkzeugoberteil oder am Werkzeugunterteil) angeordnet.

Das wenigstens eine Blecheinlegeteil ist bevorzugt am Werkzeugoberteil oder am Werkzeugunterteil so gelagert, dass ein freies Ende desselben in einem Abstand zur Scheibe in eine am Werkzeugoberteil oder am Werkzeugunterteil ausgebildete Kavität ragt. Diese Kavität begrenzt und bestimmt die Kontur der Umspritzung. Durch den Abstand zur Scheibe dringt das Material der Kunststoff-Umschäumung auch in einen Zwischenraum zwischen der Innenseite der Scheibe und dem Blecheinlegeteil, so dass diese durch die Umschäumung zum einen eine intensive Verbindung eingehen und zum anderen eine Schicht zur Schwingungs- und Geräuschdämpfung zwischen Scheibe und dem beispielsweise zur Anbindung an eine Betätigungsmechanik für die Scheibe dienenden Blecheinlegeteil bildet. Das Material der Kunststoff-Umschäumung dient auch zum Ausgleich unterschiedlicher Wärmedehnungen der Scheibe und des Blecheinlegeteils.

Das wenigstens eine Blecheinlegeteil ist mit einem von der Scheibe abgewandten Ende in wenigstens einer am Werkzeugoberteil oder am Werkzeugunterteil angeordneten oder ausgebildeten Halterung gelagert. Durch die Halterung wird eine exakte Positionierung des Blecheinlegeteil vorgegeben.

Gemäß einer vorteilhaften Weiterbildung ist der Sensor von einem induktiven Sensor gebildet. Ein derartiger induktiver Sensor ist besonders gut dafür geeignet, durch eine Scheibe hindurch das Vorhandensein von Metall zu detektieren. Die Scheibe selbst wird bevorzugt von einer Glasscheibe gebildet, kann jedoch auch von einer Kunststoffscheibe gebildet sein.

Nachfolgend werden Ausführungsbeispiele des Werkzeugs unter Bezugnahme auf die Zeichnungen näher erläutert. Es zeigen:
- Fig. 1: einen Schnitt durch einen Teil eines Werkzeugoberteils und eines Werkzeugunterteils im Randbereich einer Scheibe, mit einem Blecheinlegeteil und einem auf der anderen Seite der Scheibe angeordneten Sensor;
- Fig. 2: eine schematische Draufsicht auf die Unterseite der Scheibe mit mehreren dort positionierten Blecheinlegeteilen und einer schematischen Projektion zur Verdeutlichung der Position der auf der Oberseite der Scheibe angeordneten Sensoren für die Positionserkennung der Blecheinlegeteile; und

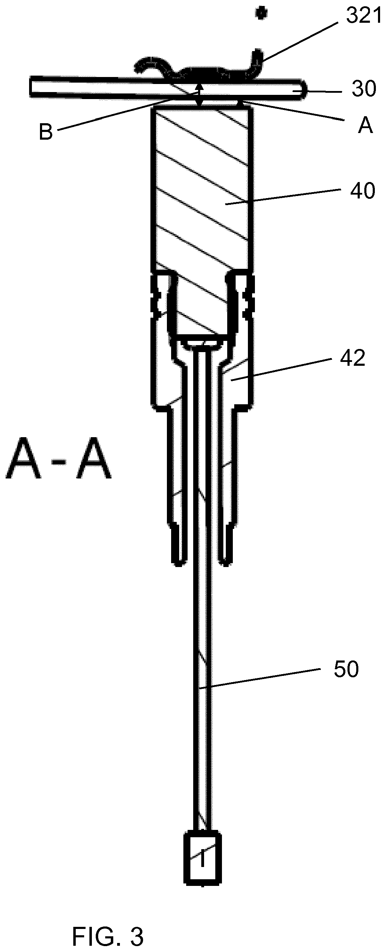

- Fig. 3: eine vergrößerte Detaildarstellung eines Sensors mit dem ihn aufnehmenden Aufnahmeadapter gemäß der Schnittlinie A-A in Figur 2.

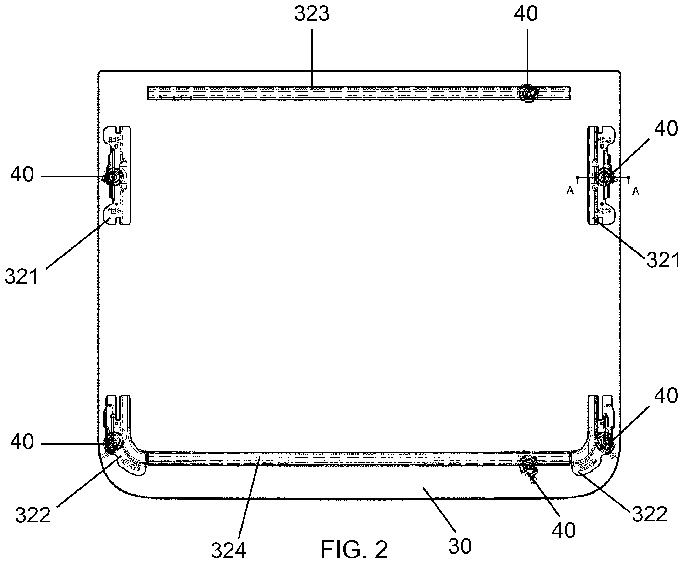

In Figur 2 ist eine Scheibe 30 dargestellt, die bevorzugt als Deckel eines Glasschiebedaches eines Fahrzeugs verwendbar ist. Die Scheibe 30 kann von einer Glasscheibe aus Einscheibensicherheitsglas (ESG), aus Verbundsicherheitsglas (VSG), aus High Tempered Glas (HTG) oder auch aus Kunststoff gebildet sein. Eine zusätzliche Einbettung von Folien auf oder unter der Scheibe 30 oder zwischen einzelnen Lagen der Scheibe 30 ist dabei ebenfalls möglich.

Zur Befestigung der nicht dargestellten Betätigungsmechanik und weiterer Zubehörteile sind an der Innenseite der Scheibe 30 mehrere Blecheinlegeteile angeordnet, die zusammenfassend mit 32 bezeichnet sind. Im Ausführungsbeispiel sind im hinteren seitlichen Bereich der Scheibe 30 gegenüberliegend zwei Blecheinlegeteile 321, im vorderen seitlichen Bereich der Scheibe 30 gegenüberliegend zwei Blecheinlegeteile 322, parallel zur Hinterkante der Scheibe 30 ein Blecheinlegeteil 323 und parallel zur Vorderkante der Scheibe 30 ein Blecheinlegeteil 324 angeordnet. In Figur 2 ist auch die Position von insgesamt sechs Sensoren 40 ersichtlich, die das Vorhandensein und die exakte Positionierung der Blecheinlegeteile überwachen.

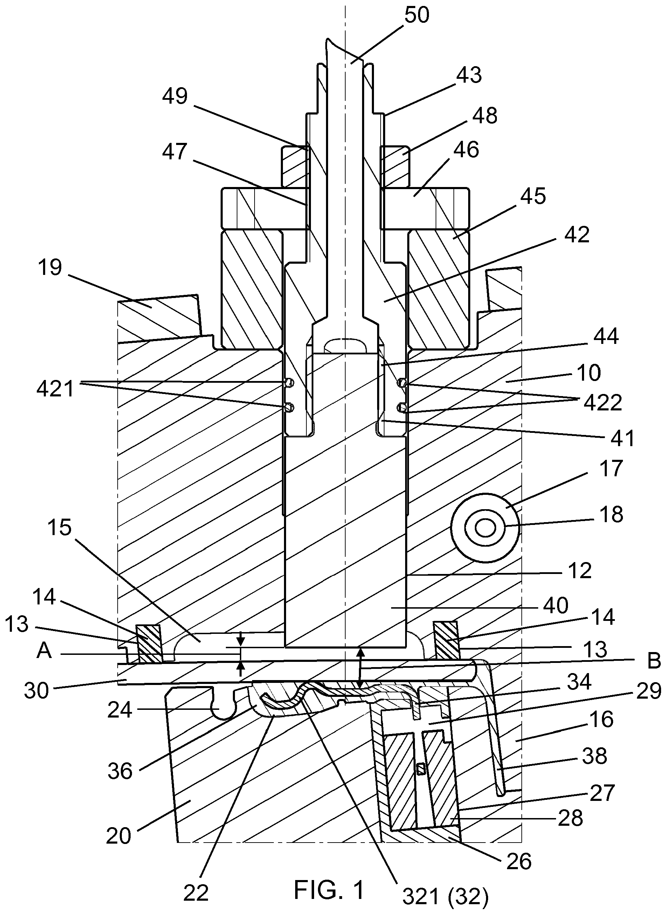

In Figur 1 ist der Randbereich der Scheibe 30 im Bereich des Blecheinlegeteils 321 mit einem umgebenden Werkzeugoberteil 10 und einem Werkzeugunterteil 20 dargestellt.

Das Werkzeugunterteil 20 weist an seiner Oberseite eine Kavität 22 auf, deren Kontur einer Umschäumung 36 entspricht, die an der Unterseite der Scheibe 30 in deren Randbereich den horizontalen Teil des Blecheinlegeteils 321 umgibt und diesen dadurch fest mit der Scheibe 30 verbindet.

Das Werkzeugunterteil 20 weist an seiner Unterseite eine Aufnahmebohrung 27 auf, in welche eine Halterung 26 eingefügt ist, die in ihrem oberen horizontalen Bereich einen Durchbruch für eine vertikale Abkantung 34 des Blecheinlegeteils 321 aufweist. Die Halterung 26 nimmt in ihrem Inneren passgenau einen Halter 28 auf, der mit einem im Wesentlichen vertikalen Schlitz den unteren Teil der Abkantung 34 aufnimmt.

Zwischen der Oberseite des Halters 28 und der oberen Innenseite der Halterung 26 ist ein Dichtungshohlraum 29 ausgebildet, der zur Aufnahme einer nicht dargestellten Dichtung dient. Die Dichtung sorgt dafür, dass kein flüssiger Kunststoff während des Schäumvorgangs aus der Kavität 22 an der Abkantung 34 entlang in den Bereich der Halterung 26 gelangen kann.

Das Werkzeugunterteil 20 weist innen an die Kavität 22 anschließend eine Dichtungsnut 24 auf, welche zur Aufnahme einer hier nicht dargestellten Dichtung dient, die sich an die Unterseite der Scheibe 30 anlegt und mit einem in Figur 1 nach rechts vorspringenden Teil unter Bildung einer Schattenfuge den Spalt zwischen Scheibe 30 und der Kavität 22 abgedichtet.

Die Kavität 22 setzt sich nach außen an die Abkantung 34 anschließend zum Rand der Scheibe 30 fort und umgibt auch deren Rand. Zwischen einem nach unten vorspringenden Rand 16 des Werkzeugoberteils 10 und dem dort entsprechend nach innen verjüngten Werkzeugunterteil 20 ist im Randbereich der Scheibe 30 zur Ausbildung einer seitlichen Blende 38 ein vertikaler Formhohlraum ausgebildet.

Im Werkzeugoberteil 10 ist eine vertikal verlaufende Bohrung 12 ausgebildet, die zur Aufnahme eines Sensors 40 dient. An der Unterseite des Werkzeugoberteils 10 ist ein flacher Hohlraum 15 ausgebildet, an welchen sich rechts und links jeweils eine Dichtungsnut 13 anschließt. Die Dichtungsnuten 13 nehmen jeweils eine Dichtung 14 auf, deren Unterseite sich dichtend auf die Oberseite der Scheibe 30 anlegt. Im Hohlraum 15 wird bei anliegenden Dichtungen 14 ein Unterdruck erzeugt, durch welchen die Scheibe 30 mit ihrer Oberseite wie von einem Saugnapf am Werkzeugoberteil 10 gehalten wird.

In der Bohrung 12 ist außer dem Sensor 40 auch ein mit dem Sensor 40 verbundener Aufnahmeadapter 42 bewegbar geführt. Der Sensor 40 ist mit einem Außengewinde 41 in ein Innengewinde 44 des Aufnahmeadapters 42 einschraubbar und dadurch auch einfach austauschbar. Der Aufnahmeadapter 42 weist an seinem Außenumfang übereinander liegend zwei Ringnuten 422 zur Aufnahme von O-Ringen 421 auf. Durch diese O-Ringe 421 wird die Dichtigkeit des Sensors 40 gegenüber dem Hohlraum 15 hergestellt, sodass die Aufrechterhaltung eines Teilvakuums im Hohlraum 19 sichergestellt ist.

Der Aufnahmeadapter 42 weist in einem oberen, im Durchmesser reduzierten Bereich ein Außengewinde 43 auf, welches mit einem darauf aufgeschraubten Einstellring 46 und einer oberhalb derselben angeordneten Kontermutter 48 zusammenwirkt. Unterhalb des Einstellrings 46 ist der Aufnahmeadapter 42 von einem Distanzring 45 umgeben, dessen Höhe durch den Einsatz eines oder auch mehrerer übereinander angeordneter unterschiedlich dicker Distanzringe 45 einstellbar ist. Der Einstellring 46 wird nach oben von einem in den Figuren nicht dargestellten Teil des Werkzeugoberteils 10 axial gesichert. Durch drehen des Einstellrings 46 mittels eines seitlich an diesem angreifenden, nicht dargestellten Werkzeugs kann der Abstand A zwischen der Unterseite des Sensors 40 und der Oberseite der Scheibe 30 und damit auch gleichzeitig ein Abstand B zwischen dem der Scheibe 30 zugewandten Stirnseite des Sensors 40 und dem auf der anderen Seite der Scheibe 30 positionierten Blecheinlegeteil 32, 321, 322, 323, 324 exakt eingestellt werden. Sofern die richtige Einstellung des Abstandes A erfolgreich vorgenommen und getestet wurde, wird der Einstellring 46 durch Anziehen der Kontermutter 48 in dieser Position fixiert.

Der Abstand A zwischen dem der Scheibe 30 zugewandten Stirnseite des Sensors 40 und der diesem zugewandten Oberfläche der Scheibe 30 beträgt bei einem Durchmesser des Sensors 40 von etwa 30 mm etwa 0,5 mm. Der Abstand B zwischen dem der Scheibe 30 zugewandten Stirnseite des Sensors 40 und dem auf der anderen Seite der Scheibe 30 positionierten Blecheinlegeteil 32, 321, 322, 323, 324 beträgt bei einer Dicke der Scheibe 30 von etwa 3,8 mm bis etwa 5 mm in etwa 8 mm. Der Abstand B bezeichnet dabei den Arbeitsschaltabstand des Sensors 40, in dem eine zuverlässige Funktion des Sensors 40 gewährleistet ist. An diesen Arbeitsschaltabstand von etwa 8 mm schließt sich ein Hysteresebereich des Sensors 40 von weiteren etwa 4 mm an. Bei einem Abstand B von 12 mm wäre für den Sensor 40 dann der Nennschaltabstand erreicht, ab dem keine zuverlässige Detektierung mehr möglich wäre. Diese relativ engen Schaltabstände unterstreichen die Bedeutung einer exakten Justierung der Abstände A und B des Sensors 40, die bei der Erfindung durch das Zusammenwirken des Aufnahmeadapters 42, des Einstellrings 46 und der Distanzringe 45 gewährleistet wird.

Als Sensor 40 eignet sich insbesondere beispielsweise ein induktiver Ganzstahl-Sensor vom Typ IC3001K0 der ipf electronic GmbH, D-58515 Lüdenscheid, der für die Zwecke der Anmelderin speziell adaptiert wurde.

Das Werkzeugoberteil 10 wird bevorzugt von einer Dämmmatte19 umgeben, um unnötige Wärmeverluste am Werkzeugoberteil zu vermeiden. In der Nähe der den Sensor 40 aufnehmenden Bohrung 12 ist im Material des Werkzeugoberteils 10 besonders bevorzugt eine quer verlaufende Kühlbohrung 17 vorgesehen, die zur Kühlung des Sensors 40 von einem Kühlmittel durchströmt wird oder in die eine Kühlpatrone 18 einsetzbar ist.

Die Handhabung des in den Figuren dargestellten Werkzeugs erfolgt in folgenden Schritten:
- Einlegen der Scheibe 30 in das aufgeklappte Werkzeugoberteil 10,
- Erzeugen eines Teilvakuums im Hohlraum 15 des Werkzeugoberteils 10 zur Fixierung der Scheibe 30 am Werkzeugoberteil 10,
- Einlegen der Blecheinlegeteile 32, 321, 322, 323, 324 in die entsprechenden Halterungen 26 am Werkzeugunterteil 20,
- Schließen des Werkzeugs durch Herunterschwenken oder Herunterklappen des Werkzeugoberteils 10 mit der Scheibe 30 auf das Werkzeugunterteil 20,
- Prüfen der Signale aller Sensoren 40 in einer nicht dargestellten Auswertungselektronik und falls alle Signale die korrekte Positionierung aller Blecheinlegeteile signalisieren,
- Einleitung des flüssigen Polyurethans(PU) in die Kavität 22 zur Herstellung der Umschäumung 36.

Es versteht sich für den Fachmann, dass sich die Erfindung ebenso auch bei einer umgekehrten Anordnung realisierbar ist, bei der die Scheibe 30 am Werkzeugunterteil 20 und die Blecheinlegeteile 32, 321, 322, 323, 324 am Werkzeugoberteil 10 positionierbar sind.

### Bezugszeichenliste

- 10: Werkzeugoberteil
- 12: Bohrung (in10)
- 13: Dichtungsnut (an 10)
- 14: Dichtung (in 13)
- 15: Hohlraum
- 16: Rand
- 17: Kühlbohrung (in 10)
- 18: Kühlpatrone
- 19: Dämmmatte
- 20: Werkzeugunterteil
- 22: Kavität (in 20)
- 24: Dichtungsnut
- 26: Halterung
- 27: Aufnahmebohrung
- 28: Halter
- 29: Dichtungshohlraum
- 30: Scheibe
- 32: Blecheinlegeteil (allgemein)
- 321: Blecheinlegeteil
- 322: Blecheinlegeteil
- 323: Blecheinlegeteil
- 324: Blecheinlegeteil
- 325: Blecheinlegeteil
- 326: Blecheinlegeteil
- 34: Abkantung (an 32)
- 36: Umschäumung
- 38: (seitliche) Blende (an 36)
- 40: Sensor
- 41: (Außen-) Gewinde (an 40)
- 42: Aufnahmeadapter
- 421: O-Ring
- 422: Ringnut (an 42, für 421)
- 43: (Außen-) Gewinde (an 42)
- 44: Innengewinde (an 42)
- 45: Distanzring
- 46: Einstellring
- 47: Innengewinde (an 46)
- 48: Kontermutter
- 49: Innengewinde (an 48)
- 50: Zuleitung
- A: Abstand (zwischen 30 und 40)
- B: Abstand (zwischen 32 bzw. 321 und 40)

## Patentansprüche

1. Formwerkzeug mit einem Werkzeugoberteil (10) und einem Werkzeugunterteil (20), mit einer zwischen Werkzeugoberteil (10) und Werkzeugunterteil (20) angeordneten Scheibe (30) und wenigstens einem mittels einer Umschäumung (36) aus Kunststoff mit der Scheibe (30) verbindbaren Blecheinlegeteil (32; 321, 322, 323, 324), **dadurch gekennzeichnet, dass** am Werkzeugoberteil (10) und/oder am Werkzeugunterteil (20) auf der dem wenigstens einen Blecheinlegeteil (32; 321, 322, 323, 324) gegenüber liegenden Seite der Scheibe (30) wenigstens ein Sensor (40) zur Detektierung der Position des Blecheinlegeteils (32; 321, 322, 323, 324) angeordnet ist.

2. Formwerkzeug nach Anspruch 1, **dadurch gekennzeichnet, dass** der wenigstens eine Sensor (40) zur Einstellung des Abstandes (A) zur Scheibe (30) bewegbar am Werkzeugoberteil (10) und/oder am Werkzeugunterteil (20) gelagert ist.

3. Formwerkzeug nach Anspruch 2, **dadurch gekennzeichnet, dass** der Sensor (40) an einem Aufnahmeadapter (42) angeordnet ist, der mittels eines Gewindes (43) gegenüber dem ihn aufnehmenden Werkzeugoberteil (10) oder Werkzeugunterteil (20) in seiner Position verstellbar ist.

4. Formwerkzeug nach Anspruch 3, **dadurch gekennzeichnet, dass** der Sensor (40) mittels eines Gewindes (41) mit dem Aufnahmeadapter (42) verbunden ist.

5. Formwerkzeug nach Anspruch 3 oder 4, **dadurch gekennzeichnet, dass** der Aufnahmeadapter (42) mittels eines Distanzrings (45) und eines Einstellrings (45) verstellbar am Werkzeugoberteil (10) und/oder am Werkzeugunterteil (20) gelagert ist.

6. Formwerkzeug nach Anspruch 5, **dadurch gekennzeichnet, dass** die Position des Einstellrings (45) mittels einer Kontermutter (48) fixierbar ist.

7. Formwerkzeug nach einem der vorhergehenden Ansprüche, **dadurch gekennzeichnet, dass** eine der Scheibe (30) zugewandte Seite des Sensors (40) in einen Hohlraum (15) ausmündet, in dem ein Unterdruck erzeugbar ist.

8. Formwerkzeug nach Anspruch 7, **dadurch gekennzeichnet, dass** der Hohlraum (15) durch wenigstens eine Dichtung (14) gegenüber der Scheibe (30) abgedichtet ist.

9. Formwerkzeug nach einem der vorhergehenden Ansprüche, **dadurch gekennzeichnet, dass** das wenigstens eine Blecheinlegeteil (32; 321, 322, 323, 324) am Werkzeugoberteil (10) oder am Werkzeugunterteil (20) so gelagert ist, dass ein freies Ende desselben in einem Abstand zur Scheibe (30) in eine am Werkzeugoberteil (10) oder am Werkzeugunterteil (20) ausgebildete Kavität (22) ragt.

10. Formwerkzeug nach einem der vorhergehenden Ansprüche, **dadurch gekennzeichnet, dass** das wenigstens eine Blecheinlegeteil (32; 321, 322, 323, 324) mit einem von der Scheibe (30) abgewandten Ende in wenigstens einer am Werkzeugoberteil (10) oder am Werkzeugunterteil (20) angeordneten oder ausgebildeten Halterung (26) gelagert ist.

11. Formwerkzeug nach einem der vorhergehenden Ansprüche, **dadurch gekennzeichnet, dass** der Sensor (40) von einem induktiven Sensor (40) gebildet wird.

12. Formwerkzeug nach einem der vorhergehenden Ansprüche, **dadurch gekennzeichnet, dass** die Scheibe (30) von einer Glasscheibe gebildet wird.

13. Formwerkzeug nach einem der vorhergehenden Ansprüche, **dadurch gekennzeichnet, dass** im Material des Werkzeugoberteils (10) und/oder des Werkzeugunterteils (20) in der Nähe des Sensors (40) wenigstens eine Kühlbohrung (18) vorgesehen ist.

14. Formwerkzeug nach Anspruch 13, **dadurch gekennzeichnet, dass** die Kühlbohrung (17) zur Leitung eines Kühlmittels oder zur Aufnahme wenigstens einer Kühlpatrone (18) dient.

## Claims

1. Molding tool having a tool upper part (10) and a tool lower part (20), having a pane (30) arranged between the tool upper part (10) and the tool lower part (20) and at least one sheet metal insert part (32; 321, 322, 323, 324) that can be connected to the pane (30) by means of foam overmolding (36) made of plastic; **characterized in that** at least one sensor (40) for detecting the position of the sheet metal insert part (32; 321, 322, 323, 324) is arranged on the tool upper part (10) and/or on the tool lower part (20) on the side of the pane (30) that is located opposite the at least one sheet metal insert part (32; 321, 322, 323, 324).

2. Molding tool according to claim 1, **characterized in that** the at least one sensor (40) for adjusting the distance (A) to the pane (30) is movably mounted on the tool upper part (10) and/or on the tool lower part (20).

3. Molding tool according to claim 2, **characterized in that** the sensor (40) is arranged on a receiving adapter (42) whose position relative to the tool upper part (10) or tool lower part (20) receiving the sensor can be adjusted by means of a thread (43).

4. Molding tool according to claim 3, **characterized in that** the sensor (40) is connected to the receiving adapter (42) by means of a thread (41).

5. Molding tool according to claim 3 or 4, **characterized in that** the receiving adapter (42) is adjustably mounted on the tool upper part (10) and/or on the tool lower part (20) by means of a spacer ring (45) and an adjusting ring (45).

6. Molding tool according to claim 5, **characterized in that** the position of the adjusting ring (45) can be fixed by means of a lock nut (48).

7. Molding tool according to one of the preceding claims, **characterized in that** a side of the sensor (40) facing the pane (30) opens into a cavity (15) in which a negative pressure can be generated.

8. Molding tool according to claim 7, **characterized in that** the cavity (15) is sealed against the pane (30) by at least one seal (14).

9. Molding tool according to one of the preceding claims, **characterized in that** the at least one sheet metal insert part (32; 321, 322, 323, 324) is positioned on the tool upper part (10) or on the tool lower part (20) such that a free end thereof projects at a distance from the pane (30) into a cavity (22) formed on the tool upper part (10) or on the tool lower part (20).

10. Molding tool according to one of the preceding claims, **characterized in that** the at least one sheet metal insert part (32; 321, 322, 323, 324) is positioned with one end facing away from the pane (30) in at least one bracket (26) arranged or formed on the tool upper part (10) or on the tool lower part (20).

11. Molding tool according to one of the preceding claims, **characterized in that** the sensor (40) is formed by an inductive sensor (40).

12. Molding tool according to one of the preceding claims, **characterized in that** the pane (30) is formed by a glass pane.

13. Molding tool according to one of the preceding claims, **characterized in that** at least one cooling opening (18) is provided in the material of the tool upper part (10), and/or the tool lower part (20) is provided in the vicinity of the sensor (40).

14. Molding tool according to claim 13, **characterized in that** the cooling opening (17) is used to guide a coolant or to receive at least one cooling cartridge (18).

## Revendications

1. Outil de moulage avec une partie supérieure d'outil (10) et une partie inférieure d'outil (20), avec un panneau (30) disposé entre la partie supérieure d'outil (10) et la partie inférieure d'outil (20) et au moins un insert en tôle (32) configuré de façon à pouvoir être relié au panneau (30) au moyen d'un enrobage de mousse (36) en matière plastique ; 321, 322, 323, 324), **caractérisé en ce qu'**au moins un capteur (40) destiné à détecter la position de l'insert en tôle (32 ; 321, 322, 323, 324) est disposé sur la partie supérieure d'outil (10) et/ou sur la partie inférieure d'outil (20) sur le côté du panneau (30) opposé à l'au moins un insert en tôle (32 ; 321, 322, 323, 324).

2. Outil de moulage selon la revendication 1, **caractérisé en ce que** l'au moins un capteur (40) pour le réglage de la distance (A) au panneau (30) est monté de manière mobile sur la partie supérieure d'outil (10) et/ou sur la partie inférieure d'outil (20).

3. Outil de moulage selon la revendication 2, **caractérisé en ce que** le capteur (40) est disposé sur un adaptateur de réception (42) dont la position peut être réglée au moyen d'un filetage (43) par rapport à la partie supérieure d'outil (10) ou la partie inférieure d'outil (20) qui le reçoit.

4. Outil de moulage selon la revendication 3, **caractérisé en ce que** le capteur (40) est relié à l'adaptateur de réception (42) au moyen d'un filetage (41).

5. Outil de moulage selon la revendication 3 ou 4, **caractérisé en ce que** l'adaptateur de réception (42) est monté de manière réglable sur la partie supérieure d'outil (10) et/ou sur la partie inférieure d'outil (20) au moyen d'une bague d'écartement (45) et d'une bague de réglage (45).

6. Outil de moulage selon la revendication 5, **caractérisé en ce que** la position de la bague de réglage (45) est configurée pour pouvoir être fixée au moyen d'un contre-écrou (48).

7. Outil de moulage selon l'une des revendications précédentes, **caractérisé en ce qu'**une face du capteur (40) tournée vers le panneau (30) débouche dans une cavité (15) dans laquelle une pression négative peut être générée.

8. Outil de moulage selon la revendication 7, **caractérisé en ce que** la cavité (15) est rendue étanche par rapport au panneau (30) par au moins un joint d'étanchéité (14).

9. Outil de formage selon l'une des revendications précédentes, **caractérisé en ce que** l'au moins un insert en tôle (32 ; 321, 322, 323, 324) est monté sur la partie supérieure d'outil (10) ou sur la partie inférieure d'outil (20) de manière à ce qu'une extrémité libre de celui-ci fasse saillie à distance du panneau (30) dans une cavité (22) formée sur la partie supérieure d'outil (10) ou sur la partie inférieure d'outil (20).

10. Outil de formage selon l'une des revendications précédentes, **caractérisé en ce que** l'au moins un insert en tôle (32 ; 321, 322, 323, 324) est monté avec une extrémité opposée au panneau (30) dans au moins un support (26) disposé ou formé sur la partie supérieure d'outil (10) ou sur la partie inférieure d'outil (20).

11. Outil de moulage selon l'une des revendications précédentes, **caractérisé en ce que** le capteur (40) est formé par un capteur inductif (40).

12. Outil de moulage selon l'une des revendications précédentes, **caractérisé en ce que** le panneau (30) est formé par un panneau de verre.

13. Outil de moulage selon l'une des revendications précédentes, **caractérisé en ce qu'**au moins un trou de refroidissement (18) est prévu dans le matériau de la partie supérieure d'outil (10) et/ou de la partie inférieure d'outil (20), à proximité du capteur (40).

14. Outil de moulage selon la revendication 13, **caractérisé en ce que** le trou de refroidissement (17) sert à conduire un fluide de refroidissement ou à recevoir au moins une cartouche de refroidissement (18).
